# EUROPÄISCHE PATENTANMELDUNG

(11) **EP 0 802 107 A2**
(43) Veröffentlichungstag der Anmeldung: **22.10.1997**
(21) Anmeldenummer: 97102963.2
(22) Anmeldetag: 24.02.1997
(51) Int. Cl.: B62D 5/083

(54) **Servoventil**

(30) Priorität: 19.04.1996 DE 19615543
(71) Anmelder: DAIMLER-BENZ AKTIENGESELLSCHAFT, 70567 Stuttgart (DE)
(72) Erfinder: Speidel, Gerd, 73650 Winterbach (DE); Fasse, Ernst-Heinrich, 73614 Schorndorf (DE)

(57) **Zusammenfassung**

Die Erfindung betrifft ein Servoventil, insbesondere für hydraulische Servolenkungen von Kraftfahrzeugen, in Form eines Drehschieberventiles mit Drehschieber und diesen koaxial umfassender, relativ zum Drehschieber gegen Federkraft drehbarer Steuerbuchse. Axial zwischen einem Stirnende der Steuerbuchse und einer zugewandten Stirnfläche eines drehschieberseitigen Teiles ist eine C-Feder angeordnet, deren Enden gegen zwei Stifte gespannt sind, von denen einer am Stirnende der Steuerbuchse und der andere an der vorgenannten Stirnfläche angeordnet ist.

## Beschreibung

Die Erfindung betrifft ein Servoventil, insbesondere für hydraulische Servolenkungen von Kraftfahrzeugen, in Form eines Drehschieberventiles mit Drehschieber und diesen koaxial umfassender, relativ zum Drehschieber gegen Federkraft drehbarer Steuerbuchse.

Derartige Servoventile sind allgemein bekannt und werden serienmäßig eingesetzt. Im Falle einer Servolenkung eines Kraftfahrzeuges mit üblicher Lenkung mittels eines Lenkhandrades bilden dabei der Drehschieber und die Steuerbuchse Teile eines Wellenzuges, der das Lenkhandrad mit den Fahrzeuglenkrädern mechanisch koppelt. Entsprechend den zwischen Lenkhandrad und Fahrzeuglenkrädern wirksamen Kräften und Momenten werden der Drehschieber und die Steuerbuchse relativ zueinander mehr oder weniger weit gegen die Federkraft aus einer relativen Mittellage ausgelenkt. Dieser Drehhub zwischen Steuerbuchse und Drehschieber bewirkt, daß ein vom Servoventil gesteuerter hydraulischer Servomotor mit hydraulischem Druck bzw. einer hydraulischen Druckdifferenz in der einen oder anderen Richtung, je nach Richtung der relativen Verdrehung zwischen Steuerbuchse und Drehschieber, steuerbar beaufschlagt wird und das jeweilige Lenkmanöver unterstützt, d.h. die am Lenkhandrad aufzubringende Handkraft entsprechend vermindert.

Die Federkraft wird typischerweise durch einen Drehstab erzeugt, der den Drehschieber mit der Steuerbuchse mechanisch koppelt. Zur Unterbringung des Drehstabes sind der Drehschieber sowie daran axial anschließende Teile der Steuerbuchse bzw. mit der Steuerbuchse drehfest verbundene Elemente rohrförmig ausgebildet.

Aufgabe der Erfindung ist es, für ein Servoventil der eingangs angegebenen Art eine besonders vorteilhafte Bauweise aufzuzeigen.

Diese Aufgabe wird erfindungsgemäß dadurch gelöst,
- daß an einem Stirnende der Steuerbuchse ein erster axialer Fortsatz exzentrisch zur Achse des Drehschieberventiles angeordnet ist,
- daß mit axialem Abstand vom freien Ende dieses Fortsatzes an einem mit dem Drehschieber drehfesten Teil eine dem vorgenannten Stirnende zugewandte Stirnfläche mit einem zum ersten Fortsatz gleichartigen weiteren Fortsatz angeordnet ist, der von der Achse des Drehschieberventiles gleichen radialen Abstand wie der erste Fortsatz aufweist,
- daß die axiale Gesamtlänge der Fortsätze etwas kürzer als der axiale Abstand zwischen dem genannten Stirnende der Steuerbuchse und der vorgenannten Stirnfläche ist, und
- daß zwischen dem genannten Stirnende der Steuerbuchse und der genannten Stirnfläche eine den Drehschieber umfassende C-Feder angeordnet ist, deren freie Enden gegen die Fortsätze gespannt sind und diese in eine miteinander fluchtende Lage zu drängen suchen.

Die Erfindung beruht auf dem allgemeinen Gedanken, axial zwischen einem Stirnende der Steuerbuchse und einem drehschieberseitigen Teil eine ringähnliche, einen Drehschieberabschnitt umschließende Feder anzuordnen, welche bei Relativdrehungen zwischen Steuerbuchse und Drehschieber aufgrund der sich dabei voneinander in Umfangsrichtung des Drehschieberabschnittes entfernenden Fortsätze mehr oder weniger weit aufgebogen wird.

Ein besonderer Vorzug der Erfindung liegt in der leichten Montierbarkeit der C-Feder. Darüber hinaus kann die C-Feder auch mit Vorspannung ausgebildet sein, derart, daß auch bei miteinander fluchtenden Stiften noch eine vorgegebene Federspannung vorliegt.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung dargestellt wird.

Dabei zeigt
- Fig. 1: einen ausschnittsweisen Axialschnitt des erfindungsgemäßen, als Drehschieberventil ausgebildeten Servoventiles,
- Fig. 2: ein Schnittbild entsprechend der Schnittlinie II-II in Fig. 1,
- Fig. 3: einen der Fig. 1 entsprechenden Axialschnitt einer abgewandelten Ausführungsform,
- Fig. 4: ein Schnittbild entsprechend der Schnittlinie IV-IV in Fig. 3 und
- Fig. 5: ein Diagramm, welches die Federcharakteristik der C-Feder wiedergibt.

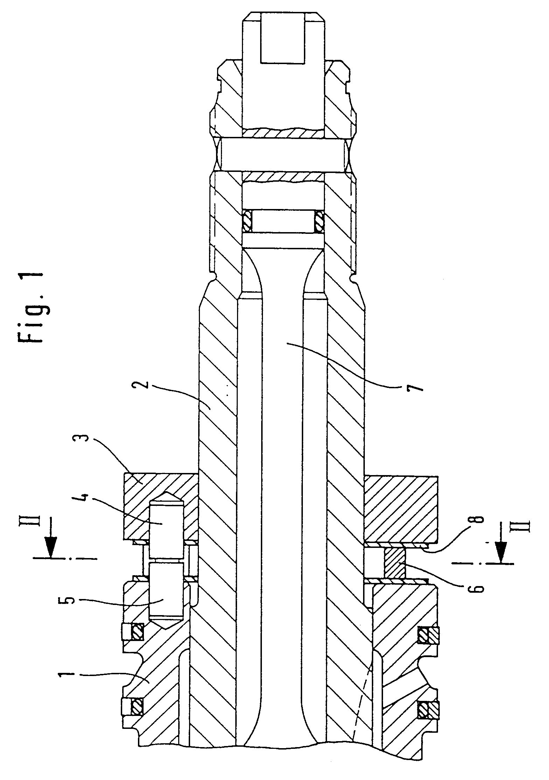

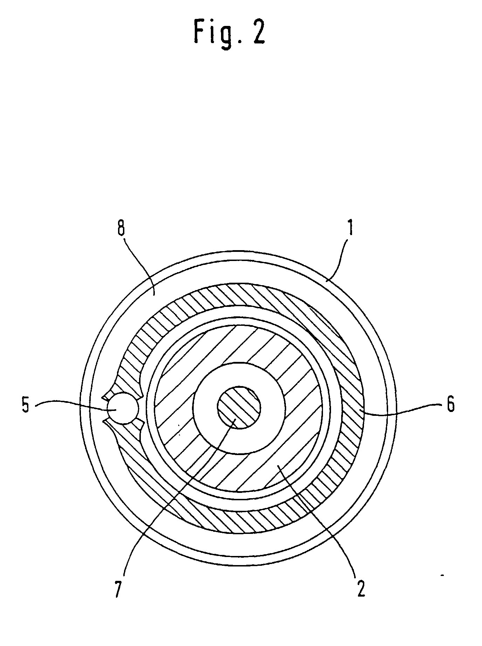

In grundsätzlich bekannter Weise besitzt das erfindungsgemäße Servoventil gemäß Fig. 1 eine Steuerbuchse 1, welche koaxial einen Drehschieber 2 umfaßt, wobei Steuerbuchse 1 und Drehschieber 2 relativ zueinander drehbar sind. Mit axialem Abstand von einem Stirnende der Steuerbuchse 1 ist am Drehschieber 2 ein Flansch 3 angeordnet. An den einander zugewandten Stirnseiten von Steuerbuchse 1 und Flansch 3 sind gleichartige, zur gemeinsamen Achse von Steuerbuchse 1 und Drehschieber 2 parallele Stifte 4 und 5 angeordnet, die von der gemeinsamen Achse von Steuerbuchse 1 und Drehschieber 2 gleiche Abstände aufweisen. Die Gesamtlänge der freien Enden der Stifte 4 und 5 ist gemäß Fig. 2 geringfügig kleiner als der axiale Abstand zwischen den einander zugewandten Stirnflächen von Steuerbuchse 1 und Flansch 3, so daß die Stifte 4 und 5 eine Relativdrehung zwischen Steuerbuchse 1 und Flansch 3 bzw. dem damit drehfest verbundenen Drehschieber 2 nicht behindern können.

Im axialen Abstandsraum zwischen Steuerbuchse 1 und Flansch 3 ist eine den Drehschieber 2 mit radialem Abstand umfassende C-Feder 6 angeordnet, deren axiale Breite (in Richtung der Achse von Steuerbuchse 2 und Drehschieber 2) etwa dem axialen Abstand zwischen den einander zugewandten Stirnflächen von Steuerbuchse 1 und Flansch 3 entspricht.

Die freien Enden der C-Feder 6 sind gegen die Stifte 4 und 5 gespannt, welche von halbrohrförmigen, d.h. ein halbkreisförmiges Profil aufweisenden Endflächen der C-Feder 6 formschlüssig aufgenommen werden.

Bei Relativdrehungen zwischen Steuerbuchse 1 und Flansch 3 bzw. Drehschieber 2 entfernen sich die Stifte 4 und 5 in Umfangsrichtung des Drehschiebers 2 voneinander, wobei die C-Feder 6 mehr oder weniger weit aufgebogen wird, weil ihr eines Ende jeweils vom Stift 4 und ihr anderes Ende jeweils vom Stift 5 mitgenommen wird. Damit erzeugt die C-Feder 6 eine zunehmende Rückstellkraft, welche die Stifte 4 und 5 in eine zueinander fluchtende Lage zu bringen sucht, in der die Steuerbuchse 1 und der Drehschieber 2 ihre relative Mittellage einnehmen.

Auch in dieser letztgenannten Lage der Stifte 4 und 5 zueinander kann die C-Feder 6 noch eine vorgegebene Vorspannung aufweisen, so daß eine Relativdrehung zwischen Steuerbuchse 1 und Drehschieber 2 erst dann auftreten kann, wenn zwischen diesen beiden Teilen ein Drehmoment auftritt, welches größer als die genannte Vorspannung ist.

Zur Verminderung von Reibung können zwischen den einander zugewandten Stirnseiten von C-Feder 6 und Steuerbuchse 1 bzw. Flansch 3 Kunststoffscheiben 8, insbesondere aus Teflon, bzw. entsprechende Beschichtungen, vorzugsweise auf den Stirnseiten der C-Feder 6, vorgesehen sein.

Im übrigen können die Steuerbuchse 1 und der Drehschieber 2 mechanisch miteinander noch in bekannter Weise durch einen Drehstab 7 verbunden sein, der innerhalb eines rohrförmigen Innenraumes des Drehschiebers 2 untergebracht ist und an seinem einen Ende, beispielsweise durch Verstiftung, fest mit dem Drehschieber 2 und an seinem anderen Ende fest mit der Steuerbuchse 1 oder dazu drehfesten Teilen verbunden ist.

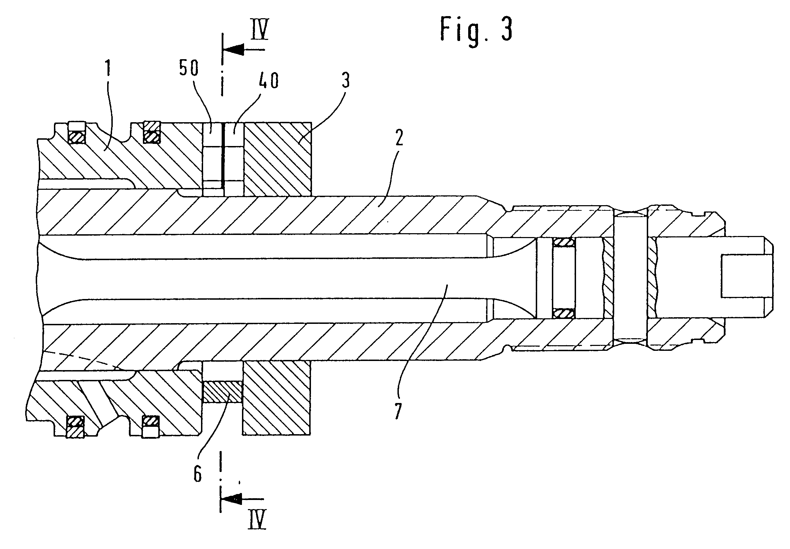

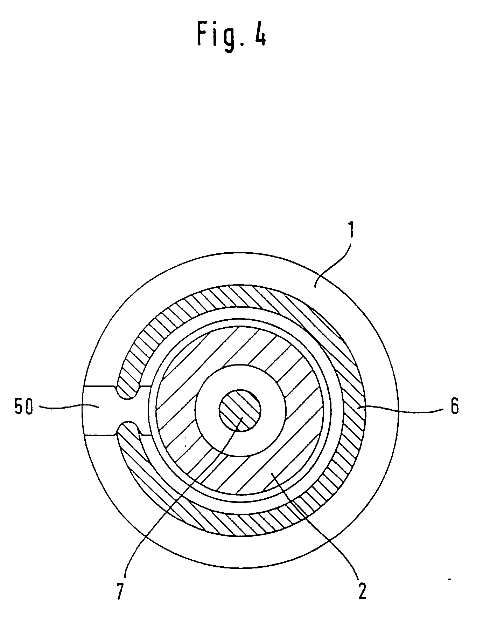

Die in den Fig. 3 und 4 dargestellte Ausführungsform unterscheidet sich von der Ausführungsform der Fig. 1 und 2 im wesentlichen dadurch, daß statt der Stifte 4 und 5 jeweils axiale Fortsätze 40 und 50 angeordnet sind, die an ihren zur Achse der Steuerbuchse 1 im wesentlichen radialen Flanken beidseitig rinnenförmige Ausnehmungen mit halbkreisförmigem Profil und gleichen radialen Abständen von der Achse der Steuerbuchse 1 aufweisen. In diese Ausnehmungen greift die C-Feder 6 mit gegengleich profilierten Enden ein, so daß sich im Ergebnis die gleiche Funktion wie bei der Ausführung der Fig. 1 und 2 ergibt.

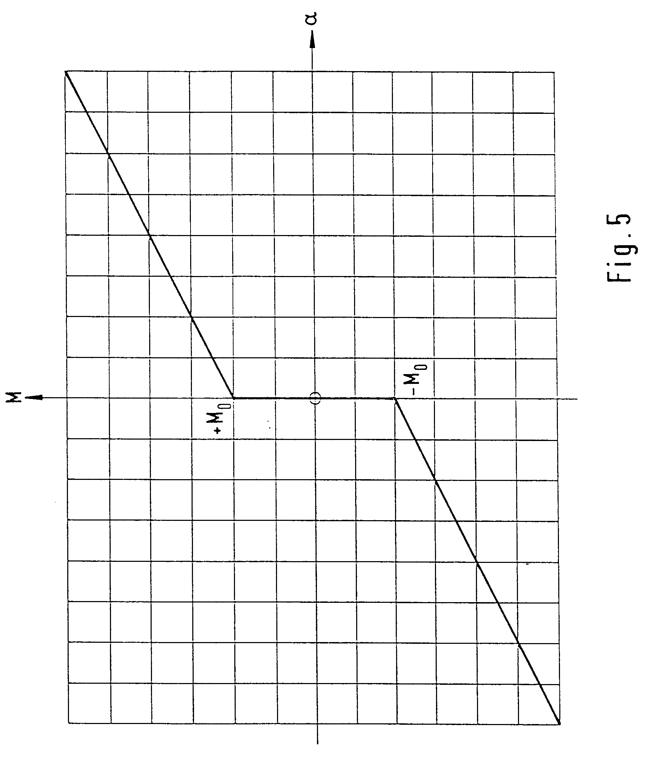

Das Diagramm der Fig. 5 zeigt die Charakteristik der C-Feder 6, d.h. das von der Feder 6 bewirkte Rückstellmoment M ist in Abhängigkeit vom Verdrehwinkel α zwischen Steuerbuchse 1 und Steuerschieber 2 (bzw. Flansch 3) dargestellt. Aufgrund der Vorspannung der Feder 6 muß beim Verlassen der Mittellage von Steuerbuchse 1 und Drehschieber 2 jeweils ein Anfangsmoment +M₀ bzw. -M₀ (das Vorzeichen bezeichnet die relative Drehrichtung) überwunden werden. Bei größer werdenden Verdrehwinkeln ergibt sich dann ein kontinuierlich ansteigendes Rückstellmoment.

## Patentansprüche

1. Servoventil, insbesondere für hydraulische Servolenkungen von Kraftfahrzeugen, in Form eines Drehschieberventiles mit Drehschieber und diesen koaxial umfassender, relativ zum Drehschieber gegen Federkraft drehbarer Steuerbuchse,
**dadurch gekennzeichnet,**
- daß an einem Stirnende der Steuerbuchse (1) ein erster axialer Fortsatz (5,50) exzentrisch zur Achse des Drehschieberventiles angeordnet ist,
- daß mit axialem Abstand vom freien Ende dieses Fortsatzes (5,50) an einem mit dem Drehschieber (2) drehfesten Teil (3) eine dem vorgenannten Stirnende zugewandte Stirnfläche mit einem zum ersten Fortsatz (5,50) gleichartigen weiteren Fortsatz (4,40) angeordnet ist, der von der Achse des Drehschieberventiles gleichen radialen Abstand wie der erste Fortsatz (5,50) aufweist,
- daß die axiale Gesamtlänge der Fortsätze (4,40;5,50) etwas kürzer als der axiale Abstand zwischen dem genannten Stirnende der Steuerbuchse (1) und der genannten Stirnfläche mit dem Drehschieber (2) drehfesten Teiles (3) ist, und
- daß zwischen dem genannten Stirnende der Steuerbuchse (1) und der genannten Stirnfläche des zum Drehschieber (2) drehfesten Teiles (3) eine den Drehschieber (2) abschnittsweise umfassende C-Feder (6) angeordnet ist, deren freie Enden gegen die Fortsätze (4,40;5,50) gespannt sind, und diese in eine miteinander fluchtende Lage zu drängen suchen.

2. Servoventil nach Anspruch 1,
**dadurch gekennzeichnet,**
daß der weitere Fortsatz (4,40) an einem drehschieberseitigen Flansch (3) angeordnet ist.

3. Servoventil nach Anspruch 2,
**dadurch gekennzeichnet,**
daß der Flansch (3) durch Formschluß und/oder Verschweißung am Drehschieber (2) bzw. einem damit drehfest verbundenen Teil gehaltert ist.

4. Servoventil nach einem der Ansprüche 1 bis 3,
**dadurch gekennzeichnet,**
daß die C-Feder (6) - in Achsrichtung des Drehschieberventiles - eine axiale Breite hat, die etwa der Breite des axialen Abstandes zwischen dem genannten Stirnende der Steuerbuchse (1) und der zugewandten Stirnfläche des zum Drehschieber (2) drehfesten Teiles (3) entspricht.

5. Servoventil nach einem der Ansprüche 1 bis 4,
**dadurch gekennzeichnet,**
daß die Fortsätze als Stifte (4,5) mit Kreisprofil und die mit den Stiften (4,5) zusammenwirkenden Endflächen der C-Feder (6) nach Art eines dem Außenumfang der Stifte (4,5) angepaßten Halbrohres ausgebildet sind.

6. Servoventil nach einem der Ansprüche 1 bis 4,
**dadurch gekennzeichnet,**
daß die Fortsätze (40,50) an ihren zur Achse der Steuerbuchse (1) im wesentlichen radialen Flanken axiale rinnenförmige Ausnehmungen mit Halbkreisprofil und jeweils gleichen radialen Abständen von der Achse der Steuerbuchse (1) aufweisen und die C-Feder (6) mit gegengleich profilierten Enden in diese Ausnehmungen eingreift bzw. mit Federspannung einzugreifen sucht.

7. Servoventil nach einem der Ansprüche 1 bis 6,
**dadurch gekennzeichnet,**
daß die C-Feder (6) vorgespannt ist und auch bei miteinander fluchtenden Stiften (4,5) noch gespannt bleibt.

8. Servoventil nach einem der Ansprüche 1 bis 7,
**dadurch gekennzeichnet,**
daß Steuerbuchse (1) und Drehschieber (2) miteinander über einen Drehstab (7) verbunden sind.
